# EUROPEAN PATENT SPECIFICATION

(11) **EP 0 824 631 B1**
(45) Date of publication and mention of the grant of the patent: **14.07.1999**
(21) Application number: 96914123.3
(22) Date of filing: 24.04.1996
(51) Int. Cl.: E21B 37/06, C10L 3/00, F17D 1/02, F15D 1/00

(54) **METHOD FOR INHIBITING THE PLUGGING OF CONDUITS BY GAS HYDRATES**
VERFAHREN ZUR VERHINDERUNG DER ABDICHTUNG DER ROHRLEITUNGEN DURCH GASHYDRATE
PROCEDE DESTINE A EMPECHER LE BOUCHAGE DE CONDUITS PAR DES HYDRATES DE GAZ

(30) Priority: 25.04.1995 EP 95201067
(43) Date of publication of application: 25.02.1998
(73) Proprietor: SHELL INTERNATIONALE RESEARCH MAATSCHAPPIJ B.V., 2596 HR Den Haag (NL)
(72) Inventor: KLOMP, Ulfert, Cornelis, NL-1031 CM Amsterdam (NL); REIJNHART, Rene, NL-1031 CM Amsterdam (NL)
(86) International application number: PCT/EP96/01732
(87) International publication number: WO 96/34177

(56) References cited:
- WO-A-93/25798
- WO-A-94/24413
- WO-A-95/17579
- WO-A-95/19408
- FR-A- 2 190 900

## Description

This invention relates to a method for inhibiting the plugging by gas hydrates of conduits containing a mixture of low-boiling hydrocarbons and water.

Low-boiling hydrocarbons, such as methane, ethane, propane, butane and iso-butane, are present in natural gas and also in crude oil. Because water may also be present in varying amounts in natural gas and crude oil, the mixture, under conditions of elevated pressure and reduced temperature, tends to form gas hydrate crystals. Gas hydrates are clathrates (inclusion compounds) of gases in a lattice consisting of water molecules. The maximum temperature at which gas hydrates can be formed strongly depends on the pressure of the system. For example, ethane at a pressure of approximately 1MPa can form hydrates only at temperatures below 4 °C whereas at a pressure of 3MPa stable hydrates can be present at temperatures as high as 14 °C. With respect to this strong dependence of the hydrate melting point on pressure, hydrates markedly differ from ice.

As described by M. von Stackelberg and H.R. Muller (Z. Electrochem., 58, 25 (1954)), methane and ethane hydrates form cubic lattices having a lattice constant of 1.2 nm (hydrate structure I). The lattice constant of the cubic propane and butane gas hydrates is 1.73 nm (hydrate structure II). However, the presence of even small amounts of propane in a mixture of low-boiling hydrocarbons will result in the formation of gas hydrates having structure II (J.H. van der Waals and J.C. Platteeuw, Adv. Chem. Phys. 2, 1 (1959)).

It has been known for a long time, that gas hydrate crystals, when allowed to form and grow inside a conduit such as a pipeline, tend to block or even damage the conduit. To prevent such blocking, the following measures are possible in principle: removal of free water; maintaining elevated temperatures and/or reduced pressures or the addition of melting point depressants (antifreezes). In practice, antifreezes are most frequently used. However, antifreezes, such as the lower alcohols and glycols, have to be added in substantial amounts to be effective, typically several tens of percent by weight of the water present. A disadvantage of such amounts is the cost of the antifreeze; a further disadvantage is that recovery is relatively expensive.

An attractive alternative to the anti-hydrate measures described above, particularly the antifreezes, is to use a crystal growth inhibitor. The principle of interfering with crystal growth is known.

Plants and poikilothermic animals such as insects and cold-water fish are known to protect themselves from freezing, both by antifreezes such as glycols and by special peptides and glycopeptides (termed antifreeze proteins and antifreeze glycoproteins) that interfere with ice crystal growth (A.L. de Vries, Comp. Biochem. Physiol, 73, 627 (1982)). Although we found such cold-water fish peptides and glycopeptides to be effective in interfering with the growth of gas-hydrate crystals, their production and use for this purpose are currently considered to be uneconomical.

In International Patent Application Publication WO-A-9325798 the use of polymers and copolymers of N-vinyl-2-pyrrolidone for inhibiting the formation, growth and/or agglomeration of gas hydrate crystals is disclosed.

It is therefore an object of the present invention to provide a method to inhibit formation of hydrates in streams containing at least some light hydrocarbons and water. It is a further object to provide such a method wherein a high concentration of additive is not required.

It has now been found that certain alkylated ammonium or phosphonium compounds are very effective, at relatively low concentrations, in interfering with the growth of gas hydrate crystals. These compounds can therefore be very useful in inhibiting the plugging by gas hydrates of conduits containing low-boiling hydrocarbons and water. The subject compounds have four organic groups in their molecule, of which two have at least eight carbon atoms.

These and other objects are therefore accomplished by a method for inhibiting the plugging of a conduit, the conduit containing a flowing mixture comprising an amount of hydrocarbons having from one to eight carbons and an amount of water wherein the amounts of hydrocarbons and water could form hydrates at conduit temperatures and pressures, the method comprising the steps of:
adding to the mixture an amount of a hydrate formation inhibitor component of the formula 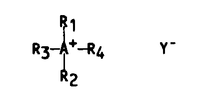 wherein two of R₁-R₄ are independently normal or branched alkyls having 4 or 5 carbon atoms,
two of R₁-R₄ are independently representing organic moieties having at least eight carbon atoms,
A represents a nitrogen or phosphorus atom, and
Y represents an anion;
the amount of the hydrate formation inhibitor compound being effective to inhibit formation of hydrates in the mixture at conduit temperatures and pressures; and
flowing the mixture containing the hydrate formation inhibitor through the conduit.

Preferably, two of R₁-R₄ independently contain between 8 and 20 carbon atoms, advantageously in the range 10 to 16 carbon atoms. Suitably, compounds are used wherein two of R₁-R₄ contain the same number of carbon atoms, each being at least 8. Preferably, use can be made of components wherein two of R₁-R₄ represent cocoyl moieties (i.e. the alkyl chains present in coconut fatty acids or similar compounds).

Suitably, at least one of R₁-R₄ contains at least a hetero-atom in addition to at least 8 carbon atoms. Suitable hetero-atoms comprise oxygen, nitrogen and sulphur, preferably oxygen or nitrogen. The groups R₁-R₄ comprising at least 8 carbon atoms suitably represent alkyl, alkenyl, aryl, arylalkyl, arylalkenyl, alkylaryl, alkenylaryl and glycol moieties.

Preferred ammonium or phosphonium alkylated compounds according to the invention are those wherein two of R₁-R₄ independently represent a -(CH₂-CHR₅-O-)ₙH or -(CH₂-CHR₅-N-R₆)ₘCH₂-CH₃ moiety wherein R₅ represents H or CH₃, R₆ represents H or alkyl, such as CH₃ or C₂H₅, n represents an integer from 4 to 50 and m represents an integer from 3-5.

Further preferred hydrate formation inhibition compounds are those ammonium or phosphonium alkylated compounds according to the invention wherein at least one of R₁-R₄ represents a 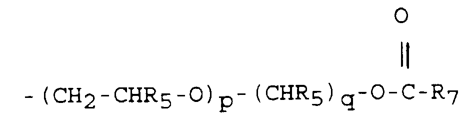 moiety, wherein R₅ represents H or CH₃, p represents 0 or an integer up to 50, q represents an integer up to 20 and R₇ represents an alkyl, alkenyl, aryl, arylalkyl, arylalkenyl, alkylaryl or alkenylarylgroup having at least a carbon chain of 6 atoms.

Compounds which can be used advantageously are those wherein q represents 2-4 and R₇ represents an alkyl or alkenyl group having at least 9 carbon atoms or compounds wherein p is zero, q represents 2 and R₇ represents an alkyl or alkenyl group of between 9 and 18 carbon atoms. Preferred compounds are those wherein two of R₁-R₄ represent the same ester moiety. Examples of such preferred compounds are those wherein R₇ represents the carbon chain of coconut fatty acid or tallow fatty acid.

Suitably, the anion (Y⁻) represents a hydroxide, a carboxylate, a halide such as chloride or bromide, a sulphate or an organic sulphonate. Preferably, Y⁻ represents a chloride, bromide or a sulphate.

The compounds containing oxygen and/or nitrogen atoms as defined hereinbefore are advantageous in that they have biodegradable properties which renders them eminently suitable for the envisaged use. A further advantage in the envisaged use is that such compounds are sparingly soluble in water which allows discarding production water containing only marginal concentrations of such compounds.

The alkylated compounds according to the invention can be chemically bound through one of the R₁-R₄ groups to polymers. They then are branches of these polymers. Examples of polymers to which the alkylated compounds according to the invention can be suitably bound include polyacrylic acid, and polymers and copolymers of N-vinyl-2-pyrrolidone.

If desired, corrosion inhibitors may be added to the hydrocarbon/water mixture. Corrosion inhibitors known to those skilled in the art can be suitably applied. Suitable corrosion inhibitors comprise primary, secondary or tertiary amines or quaternary ammonium salts, preferably amines or salts containing at least one hydrophobic group.

Examples of corrosion inhibitors comprise benzalkonium halides, preferably benzyl hexyldimethyl ammonium chloride.

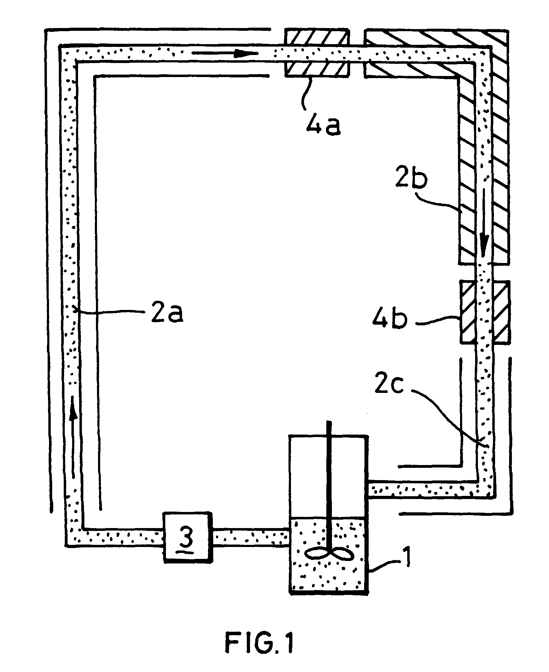

Fig. 1 is a schematic drawing of the apparatus used in the experimental set-up.

The amount of the alkylated compound used in the process according to the invention is generally between 0.05 and 11 wt%, preferably between 0.1 and 5 wt%, most preferably between 0.1 and 0.5 wt%, based on the amount of water in the hydrocarbon-containing mixture.

The alkylated compounds according to the invention can be prepared in manners which are known in the art, from ingredients which are simple and abundantly available.

The alkylated compounds according to the invention can be added to the subject mixture of low-boiling hydrocarbons and water as their dry powder or, preferably, in concentrated solution.

The alkylated compounds according to the present invention can be used together with a polymer of an ethylenically unsaturated N-heterocyclic carbonyl compound, suitably an aliphatic (N-heterocyclic carbonyl) polymer with units derived from N-vinyl-pyrrolid-2-one and an unsaturated hydrocarbon having between 4 and 30 carbon atoms. Suitably, the polymer unit is derived from N-vinyl-pyrrolid-2-one and butylene, octylene, dodecylene, hexadecylene, eicosylene and tricosylene. Reference is made to the polymers or copolymers of N-vinyl-2-pyrrolidone which are the subject of the aforementioned International Patent Application Publication WO-A-9325798, and the combined effect is at least additive. The polymers or copolymers of N-vinyl-2-pyrrolidone are preferably added to an amount of between 0.05 and 4 wt%, based on the water content.

The compounds may further be combined with film-forming agents which are known to prevent water-wetting of metal surfaces and to interfere with the agglomeration of any crystallites and with their adhesion to the wall of the conduit through which the mixture is passed. Typical examples of such film-forming agents are long-chain alkyl amines, alkyl diamines, quaternary ammonium salts and imida-zolines, optionally in combination with high molecular-weight organic acids. Mono-valent and divalent salts of long-chain alkaryl sulphonic acids are also suitable as film-forming agents. These salts are disclosed in European Patent Specification EP-B-457,375.

The following Examples will illustrate the invention.

Description of equipment.

In the type A and B experiments that are detailed below field conditions were simulated by using a highpressure flow loop facility which is schematically shown in Figure 1 and which consists of a stainless steel pipeloop (2a-c) having an inner diameter of 19 mm and an effective length of 108 metres, a mixing tank (1) and a gear pump (3) for circulating a hydrate forming mixture of water and liquid hydrocarbons through the loop. The pipeloop can be seen as being divided into 9 sections (each having a length of 12 metres) and each of which is equipped with a thermometer and a differential pressure meter allowing the monitoring of the pressure drop over each individual section.

Sections 1-6 (2a) and section 9 (2c) are surrounded by a coaxial pipe through which a temperature-controlled liquid is circulated in counterflow to the hydrate forming medium (which flows from section 1 to section 9).

Sections 7 and 8 (2b) are thermally well-insulated and equipped with viewing windows (mounted near the inlet of section 7 (4a) and the outlet of section 8(4b)) to allow the visual observation of the hydrate forming medium in the pipeloop.

Hydrate formation is triggered by cooling 1 cm² of the inner surface of the pipeloop near the end of section 3 to a constant temperature of -15 °C. This "cold spot" was switched-off immediately after the first hydrates were formed.

Standard filling and pre-conditioning procedure.

In all type A and B experiments described hereafter, the loop facility (having a total volume 62.5 litres) was (at a temperature of 24 °C) initially filled with 5 litres of water, 39.2 litres of a hydrocarbon liquid, such as "SHELLSOL D60" (trade name for a mixture of paraffinic and naphthenic hydrocarbons, mainly in the C₁₀ - C₁₂ range, available from Shell Oil Company, Houston, Texas) and 3.2 kilograms of propane. Subsequently, methane was introduced until the equilibrium pressure of the system was 78 bars. This procedure leads to the formation of a three-phase system (i.e. a vapour phase, a liquid aqueous phase and a liquid hydrocarbon phase) in which can form stable hydrates at temperatures below 19 °C. In all type A and B experiments the liquid phases of the hydrate forming medium were circulated through the pipeloop at a rate of 120 grams/second (or 540 litres per hour) which corresponds to a Reynolds number of approximately 8000 (turbulent flow). Prior to the start of each experiment the hydrate forming medium was circulated for approximately one day at a temperature of 23 °C to obtain thermodynamic equilibration and an even distribution of the liquid phases throughout the entire system.

The effect of an additive (hydrate formation inhibitor component) was assessed by comparing the experimental results of a blank test (in which no additive had been added to the hydrate forming medium) with those of an additive test (in which the system was doped with the additive concerned) and which was carried out under the same conditions of the blank test. Two different types of experiment viz. type A and B were performed to detect such effect.

### TYPE A EXPERIMENTS

These experiments represent the hydrate remelting operation mode in which the hydrate forming medium is cooled exponentially in the first three sections of the flow loop.

### Experiment A 1a (blank test)

During this experiment the loop was filled with 5 liters of water, 3.2 kilograms of propane and 39.2 liters of "SHELLSOL D60" (the trade name for a mixture of paraffinic and naphthenic hydrocarbons, mainly in the C₁₀-C₁₂ range, available from Shell Oil Company, Houston, Texas) and pressurised with methane until the equilibrium pressure at 24 °C was 78 bara. After performing the initial preparations described above, the experiment was started by gradually controlling the temperature of the coolant circulating around the first six sections in such a way that the hydrate forming liquids exited the sixth section at a temperature of 23-t °C in which t denotes the time (in hours) which elapsed since the start of the cooling. When passing through the nineth section the hydrate forming medium was reheated such that it always entered the first section at a fixed temperature of 23 °C. When applying this experimental procedure the temperature dropped exponentially from 23 to 23-t degrees over the first three sections, remained essentially constant in sections 4 through 8, after which the medium was reheated in the nineth section. In this mode of operation the hydrate crystals which were formed in sections 1 to 8 but which were transported by the flow to the last section were all melted.

When this experiment was performed the pressure drop over the pipeloop started to increase after four hours (which was due to hydrate deposition at the pipeline wall) at which stage the medium reached a minimum temperature of 18.7 °C near the outlet of the sixth section. Hereafter the medium could be circulated for another hour during which the pressure drop was gradually increasing until it exceeded a value of 2 bars which was considered to correspond with a complete blockage of the loop. At this time the minimum temperature of the medium at the outlet of the sixth section was 17.9 °C.

### Experiment A 1b

This experiment was identical to experiment A 1a except for the addition of 12.5 grams of dibutyl-dicocoylammonium bromide to the hydrate forming mixture. In this case the cooling cycle could be maintained for 22 hours at which stage the temperature of the medium had reached a minimum temperature of 1 °C whereas the pressure drop over the loop had only slightly increased. This increase was due to an increased viscosity of the hydrate forming medium rather than to hydrate deposition. Hereafter the circulation was maintained for one hour during which the temperature profile over the loop was kept constant and during which the pressure drop did not increase. Then the circulation was stopped for a few minutes during which a milky aqueous layer separated rapidly from the water/hydrocarbon mixture. Note that during the periods during which the circulation is stopped the hydrate forming medium residing in sections 1 through 8 rapidly attained a constant temperature which corresponds to the lowest temperature (i.e. 1 °C in this particular experiment) which the hydrate forming medium had reached during the preceeding period of circulation. The original temperature profile over the loop was restored very shortly after the restart of the circulation. When the circulation was restarted larger chunks of hydrates were observed to have formed during the shut-in period. These chunks, which did not adhere onto the pipeline wall, jammed the loop a few minutes after the restart.

### Experiment A 1c

This experiment was identical to experiment A 1b except that the cooling cycle was maintained for 13 hours until the medium reached a minimum temperature of 10 °C. Then the circulation was consecutively: stopped for 30 seconds, restarted for 10 minutes, stopped for 1 minute, restarted for 20 minutes, stopped for 5 minutes, restarted for 20 minutes, stopped for 30 minutes and restarted again. Each time the circulation could be smoothly restarted whereas the pressure drop did not increase with respect to the situation prior to shut-down.

During the following five hours the cooling cycle was continued until the hydrate forming medium reached a minimum temperature of 5 °C after which the sequence of shut-downs and restarts as described above was repeated. Again no pressure drop increase was observed and the circulation could be smoothly restarted after each shut-down period.

Then the cooling cycle was continued again for 4 hours until the medium reached, when exiting the sixth section, a minimum temperature of 1 °C which corresponds to the situation during experiment A 1b just prior to shut-down. The circulation was maintained for 14 hours during which the temperature profile over the loop was held constant and no increase in pressure drop was observed. Hereafter the circulation was stopped for 5 minutes during which a liquid aqueous layer segregated from the hydrocarbon mixture. After a shut-down period of 1 minute hydrates were clearly seen to form at the interface between this layer and the hydrocarbon liquid. When the circulation was restarted the pressure drop had slightly increased with respect to the situation prior to shut-down. After 2.25 hours of circulation both the hydrates deposited and the water layer were completely resuspended in the hydrocarbon phase. Hereafter the circulation was stopped for 30 minutes during which a large amount of hydrates were formed. After restart of the circulation the pressure drop appeared to have increased significantly. The circulation could be maintained for 6.5 hours during which the pressure drop was steadily fluctuating. Whether this was due to a periodic (near) blocking of the loop by hydrates or by a fault in the differential pressure meters remains uncertain.

### Experiment A 2a (blank test)

During this reference experiment the loop was filled with 5 liters of water, 3.2 kilograms of propane and 39.2 liters of a mixture containing 85 w% of SHELLSOL D60 and 15 w% of SHELLSOL R (the trade name for a mixture containing 80% of aromatic hydrocarbons, mainly in the C₁₀-C₁₂ range) and pressurised with methane until the equilibrium pressure at 24 °C was 78 bars. In the same way as described in experiments A 1a - A 1c the hydrate forming medium was cooled in such a way that the temperature at which the medium exited the sixth section decreased (starting from 23 °C) by 1 °C per hour. After 4.2 hours, at which time the minimum temperature of the medium was 18.8 °C, the pressure drop over the loop started to increase. The circulation and cooling could be continued for another 1.4 hours (when the minimum temperature of the hydrate forming medium reached 17.4 °C) after which the loop became blocked by hydrates.

### Experiment A 2b

This experiment was identical to experiment A 2a except for the addition of 12.5 grams of the diester of dibutyldiethanolammonium bromide and coconut fatty acid. The cooling cycle was continued for 22 hours at which time the hydrate forming medium had reached a minimum temperature of 1 °C and the pressure drop over the loop had increased slightly due to an increase of the viscosity of the medium. Subsequently the circulation was, whilst keeping the temperature profile over the loop constant, maintained for another 3 hours during which the pressure drop over the loop remained essentially constant. Hereafter the circulation was stopped for 1 hour and subsequently restarted. The circulation could be maintained for 3 hours before the loop became blocked by hydrates. During this period the pressure drop over the loop was, compared to the situation prior to shut-down, increased by a factor of six indicating the deposition of hydrates at the pipeline wall.

### Experiment A 2c

This experiment was identical to experiment A 2b except that after 22 hours of cooling (at the end of which the hydrate forming medium had attained a minimum temperature of 1 °C) the circulation was maintained for 65 hours whilst the temperature profile over the loop was kept constant. It appeared that the pressure drop over the loop started to increase markedly after 8 hours of circulation. This continued for another 57 hours at which time the loop became completely blocked by hydrates.

### Experiment A 2d

Experiment A 2c was repeated except that the cooling cycle was stopped after 18 hours at which time the minimum temperature of the hydrate forming medium was 5 °C. Hereafter the temperature profile over the loop was kept constant whilst the hydrate forming medium was circulated for 4 hours during which time the pressure drop over the loop remained constant. Subsequently the circulation was stopped during 2.5 hours and then restarted. Large chunks of hydrates appeared to have formed during shut-down. These chunks of hydrates jammed the loop a few minutes after the circulation was restarted.

### Experiment A 3a

This reference experiment was a duplicate of experiment A 2a. During this experiment the first increase in the pressure drop was observed when the minimum temperature of the medium was 20 °C and approximately one hour later the loop became completely blocked by hydrates when the minimum temperature of the medium was 18.9 °C.

### Experiment A 3b

This experiment was identical to experiments A 2a and A 3a except for the addition of 12.5 grams of the diester of dibutyldiethanolammonium chloride and tallow fatty acid. The pressure drop over the loop started to increase during the cooling cycle when the minimum temperature of the hydrate forming medium was 7 °C and 2 hours later the loop became completely blocked by hydrates when this temperature was 5 °C.

### Experiment A 3c

This experiment was identical to experiment A 3b except for the extra addition of 150 grams of NaCl and of 32.5 grams of the diester of dibutyldiethanol ammonium chloride and 2-ethylhexanoic acid. 24 hours after the cooling cycle was started the hydrate forming medium at the outlet of the sixth section had reached a temperature of -1 °C whereas the pressure drop over the loop had increased slightly due to an increase in the viscosity of the hydrate forming medium. Hereafter the circulation was maintained for another 4 hours whilst the temperature profile over the loop was kept constant. The pressure drop over the loop did not increase during this period. Subsequently the circulation was stopped for 4.5 hours. Then the circulation could be restarted and the pressure drop over the loop appeared to be identical to the pressure drop prior to the shut-down period.

### TYPE B EXPERIMENTS

These experiments represent the hydrate recirculation mode in which the temperature of the hydrate forming medium is kept constant throughout the entire test facility.

### Experiment B 1a (blank test)

The test facility was filled with 5 liters of water, 3.2 kilograms of propane and 39.2 liters of SHELLSOL D60 after which methane was added until the equilibrium pressure at 24 °C was 78 bars (the same filling as the one used in experiment A 1a). After performing the initial preparations described above this reference experiment was started by cooling the hydrate forming medium at a rate of 1 °C/hr. Because no heating was applied in the nineth section, the temperature of the hydrate forming medium was independent of the position of the medium in the test facility. In this type of experiment the hydrates which are carried by the flow become severely crushed when they pass through the gear pumps. During this experiment the first increase in the pressure drop was observed after four hours by which time the temperature of the medium was 18.8 °C. The circulation could be maintained for another hour during which the pressure drop increased continuously until the loop became completely blocked by hydrates. At the time of blocking the temperature of the hydrate forming medium was 18.0 °C.

### Experiment B 1b

This experiment was identical to experiment B 1a except for the addition of 12.5 grams of dibutyl-dicocoylammonium bromide. Eleven hours after the start of the cooling cycle, at which time the temperature of the medium was 12 °C, the circulating liquids became hazy whereas the pressure in the system dropped rapidly indicating that a substantial amount of hydrates were formed. The cooling cycle was continued for another 11 hours after which the temperature of the hydrate forming medium was reduced to 1 °C and only a slight increase in the pressure drop over the loop was observed. The medium was circulated for another two hours during which the pressure drop did not increase. At this stage the pressure of the system had dropped to 52 bars indicating that practically all water was converted into hydrates. Subsequently the circulation was stopped resulting in the slow separation of a layer of very fine hydrate crystals from the hydrate forming medium. This shut-down condition was maintained for the next 22 hours during which the temperature of the medium was kept at 1 °C. When the circulation was restarted the layer of loose powder hydrates became readily resuspended into the hydrocarbon liquids resulting in the formation of the hydrate suspension which was observed prior to shut-down. Also the pressure drop over the pipeloop had not increased with respect to the situation before the circulation was stopped.

### Experiment B 1c

This experiment was identical to experiment B 1b except that the hydrate forming medium was uniformly cooled at a rate of 25 °C per hour until (i.e. after 0.7 hours) the temperature of the medium was reduced to 1 °C. At this point the pressure of the system was 63 bars indicating that hardly any hydrates were formed. The circulation was maintained for another 16 hours during which the pressure drop did not increase significantly even though the system pressure decreased to 52 bar indicating that practically all water became converted into very fine powder hydrates. Next the circulation was stopped whilst the temperature of the medium was kept constant at 1 °C. After three hours of shut-down the circulation was restarted which again resulted in a rapid redispersion of the layer of powder hydrates into the liquid hydrocarbon phase. The pressure drop over the pipeloop had not increased with respect to the situation prior to shut-down.

### Experiment B 1d

This experiment is identical to experiment B 1c in that the medium was rapidly cooled from 23 °C to 1 °C at a rate of 25 °C per hour after which the circulation was stopped immediately. At this time the system pressure was 63 bar indicating that little hydrates were formed. The flow could be smoothly restarted after a shut-down period of 1.5 hours when the system pressure was still 63 bars. The pressure drop over the loop had not increased compared to the situation prior to shut-down.

### Experiment B 2a

In this experiment the loop was filled with 12.5 grams of the diester of dibutyldiethanol ammonium bromide and coconut fatty acid, 5 liters of water, 3.2 kilograms of propane, 39.2 liters of a mixture consisting of 85% SHELLSOL D60 and 15% of SHELLSOL R, after which methane was added until the equilibrium pressure of the system at 24 °C was 78 bars. (Note that this filling is identical to the one used during experiment 2b). The hydrate forming medium was uniformly cooled at a rate of 1 °C per hour during 22 hours until the temperature of the medium was 1 °C. Then the circulation was continued for another hour whilst maintaining the temperature of the medium at 1 °C. Hereafter the flow was stopped causing fine powder hydrates to segregate from the hydrocarbon liquids. These powder hydrates were rapidly redispersed in the hydrocarbon liquid when the flow was restarted after 93 hours of shut-down. The pressure drop over the loop had not increased with respect to the situation prior to shut-down.

### Experiment B 2b

In this experiment the loop was filled with 12.5 grams of the diester of dibutyldiethanol ammonium chloride and tallow fatty acid, 5 liters of water, 3.2 kilograms of propane, 39.2 liters of a mixture of 85% SHELLSOL D60 and 15% SHELLSOL R, after which methane was added until the equilibrium pressure of the system was 78 bara. The hydrate forming medium was uniformly cooled at a rate of 1 °C per hour until it reached a temperature of 1 °C. Hereafter the circulation was maintained for another hour during which the temperature of the medium was kept constant at 1 °C. Then the circulation was stopped during 3.5 hours which caused powder hydrates to segregate from the hydrocarbon liquid. These hydrates were readily redispersed in the hydrocarbon liquids when the flow was restarted after this shut-down period. The pressure drop over the loop had not increased with respect to the situation prior to shut-down.

### TYPE C EXPERIMENTS

Experiments were carried out to measure biodegradation of quaternary ammonium compounds relevant to the present invention.

Closed bottle tests with natural sea water in accordance with the test protocol of OECD 306 revealed that the biodegradation of dibutyldicocoylammoniumbromide remained at 0% after 28 days and that biodegradation of dimyristylester of dibutyldiethanolammonium when present in the following concentrations in sea water took place at the following rates:

| concentration | biodegradation | | | |
|---|---|---|---|---|
| (mg/l seawater) | after 5 days | after 15 days | after 28 days | after 56 days |
| 0.42 | 35% | 33% | 50% | 52-59% |
| 1.17 | 37% | 38% | 52% | 35-52% |

On the basis of data reported in the article "Environmental fate and effects of DEEDMAC, a new rapidly biodegradable cationic surfactant for use in fabric softeners" published by S.T. Giolando, R.A. Rapapart, R.J. Larson and T.W. Federle in the magazine Chemosphere, Vol. 30, No. 6, January 1995, pag. 1057-1083 about the biodegradability of chemical compositions it can be assumed that the diester compounds identified in the specification will have a biodegradability which is in line with the rates of biodegradation identified in the table.

## Claims

1. A method for inhibiting the plugging of a conduit, the conduit containing a flowing mixture comprising an amount of hydrocarbons having from one to eight carbon atoms and an amount of water wherein the amounts of hydrocarbons and water could form hydrates at conduit temperatures and pressures, the method comprising the steps of:
adding to the mixture an amount of a hydrate formation inhibitor component of the formula 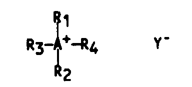 wherein two of R₁-R₄ are independently normal or branched alkyls having 4 or 5 carbon atoms,
two of R₁-R₄ are independently representing organic moieties having at least 8 carbon atoms,
A represents a nitrogen or phosphorus atom, and
Y represents an anion,
the amount of the hydrate formation inhibitor component being effective to inhibit formation of hydrates in the mixture at conduit temperatures and pressures, and
flowing the mixture containing the hydrate formation inhibitor component through the conduit.

2. The method according to claim 1, wherein two of R₁-R₄ independently contain between 8 and 20 carbon atoms, preferably in the range 10 to 16 carbon atoms.

3. The method according to claim 1 or 2, wherein two of R₁-R₄ contain the same number of carbon atoms, each being at least 8.

4. The method according to claim 1, wherein at least one of R₁-R₄ contains a hetero-atom in addition to at least 8 carbon atoms.

5. The method according to claim 4, wherein two of R₁-R₄ contain a hetero-atom in addition to at least 8 carbon atoms.

6. The method according to claim 4 or 5, wherein the hetero-atom is an oxygen or a nitrogen atom.

7. The method according to claim 6, wherein two of R₁-R₄ independently represent a -(CH₂-CHR₅-O)ₙH or -(CH₂-CHR₅-N-R₆)ₘ-CH₂-CH₃ moiety wherein R₅ represents H or CH₃, R₆ represents H or alkyl, such as CH₃ or C₂H₅, n represents an integer from 4 to 50 and m represents an integer from 3-5.

8. The method according to any one of claims 4-6, wherein at least one of R₁-R₄ represents a 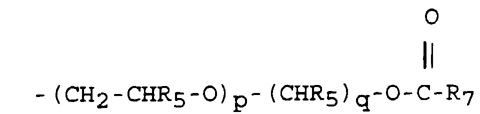 moiety, wherein R₅ is H or CH₃, p represents 0 or an integer up to 50, q represents an integer up to 20 and R₇ represents an alkyl, alkenyl, aryl, arylalkyl, arylalkenyl, alkylaryl or alkenylaryl group having at least a carbon chain of 6 atoms.

9. The method according to claim 8, wherein q represents 2-4 and R₇ represents an alkyl or alkenyl group having at least 9 carbon atoms.

10. The method according to claim 9, wherein p is zero, q represents 2 and R₇ represents an alkyl or alkenyl group of between 9 and 18 carbon atoms.

11. The method according to claim 10, wherein R₇ represents the carbon chain of coconut fatty acid or tallow fatty acid.

12. The method according to one or more of claims 1-11, wherein the anion represents a hydroxide, a carboxylate, a halide, a sulphate or an organic sulphonate.

13. The method according to one or more of claims 1-12, wherein between 0.05 and 11 wt%, based on the water content, of the hydrate formation inhibitor is added to the hydrocarbon/water mixture.

14. The method according to claim 13, wherein the amount of hydrate formation inhibitor added is between 0.1 and 5 wt%, preferably 0.1 to 0.5 wt% based on the water content.

15. The method according to one or more of claims 1-14, wherein a corrosion inhibitor is added to the hydrocarbon/water mixture.

16. The method according to claim 15, wherein the corrosion inhibitor is a primary, secondary or tertiary amine or a quaternary ammonium salt, preferably containing at least one hydrophobic group.

17. The method according to claim 16, wherein the corrosion inhibitor is a benzalkonium halide, preferably benzylhexyl dimethyl ammonium chloride.

18. The method according to one or more of claims 1-17, wherein a polymer of an ethylenically unsaturated N-heterocyclic carbonyl compound is added to the hydrocarbon/water mixture.

19. The method according to claim 18, wherein the polymer is an aliphatic (N-heterocyclic carbonyl)polymer with units derived from N-vinyl pyrrolid-2-one and an unsaturated hydrocarbon having between 4 and 30 carbon atoms.

20. The method according to claim 19, wherein the polymer unit is derived from N-vinylpyrrolid-2-one and butylene, octylene, dodecylene, hexadecylene, eicosylene and tricosylene.

## Patentansprüche

1. Verfahren zum Inhibieren des Verstopfens einer Leitung, welche Leitung ein strömendes Gemisch mit einem Gehalt an einer Menge von Kohlenwasserstoffen mit ein bis acht Kohlenstoffatomen und an einer Menge Wasser enthält, worin die Mengen an Kohlenwasserstoffen und Wasser bei Leitungstemperaturen und -drücken Hydrate ausbilden könnten, welches Verfahren die folgenden Stufen umfaßt:
Zusetzen einer Menge einer Hydratbildungsinhibitorkomponente mit der Formel 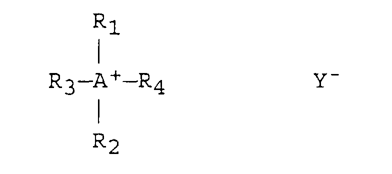 zu dem Gemisch, wobei zwei der Reste R₁ bis R₄ unabhängig voneinander gerade oder verzweigte Alkylreste mit 4 oder 5 Kohlenstoffatomen bedeuten,
zwei der Reste R₁ bis R₄ unabhängig voneinander organische Reste mit wenigstens acht Kohlenstoffatomen bedeuten,
A für ein Stickstoff- oder Phosphoratom steht und
Y ein Anion bedeutet;
wobei die Menge der Hydratbildungsinhibitorkomponente zum Inhibieren der Ausbildung von Hydraten in dem Gemisch bei Leitungstemperaturen und -drücken wirksam ist; und
Strömenlassen des Gemisches, das den Hydratbildungsinhibitor enthält, durch die Leitung.

2. Verfahren nach Anspruch 1, worin zwei der Reste R₁-R₄ unabhängig voneinander 8 bis 20 Kohlenstoffatome, vorzugsweise im Bereich von 10 bis 16 Kohlenstoffatome enthalten.

3. Verfahren nach Anspruch 1 oder 2, worin zwei der Reste R₁-R₄ die gleiche Kohlenstoffatomanzahl enthalten, die jeweils wenigstens 8 beträgt.

4. Verfahren nach Anspruch 1, worin wenigstens einer der Reste R₁-R₄ ein Heteroatom zusätzlich zu wenigstens 8 Kohlenstoffatomen enthält.

5. Verfahren nach Anspruch 4, worin zwei der Reste R₁-R₄ ein Heteroatom zusätzlich zu wenigstens 8 Kohlenstoffatomen enthalten.

6. Verfahren nach Anspruch 4 oder 5, worin das Heteroatom ein Sauerstoff- oder Stickstoffatom ist.

7. Verfahren nach Anspruch 6, worin zwei der Reste R₁-R₄ unabhängig voneinander einen Rest -(CH₂-CHR₅-O-)ₙH oder -(CH₂-CHR₅-N-R₆)ₘCH₂-CH₃ darstellen, worin R₅ für Wasserstoff oder CH₃ steht, R₆ Wasserstoff oder Alkyl bedeutet, wie CH₃ oder C₂H₅, n eine ganze Zahl von 4 bis 50 bedeutet und m eine ganze Zahl von 3 bis 5 darstellt.

8. Verfahren nach einem der Ansprüche 4 bis 6, worin wenigstens einer der Reste R₁ bis R₄ für einen Rest 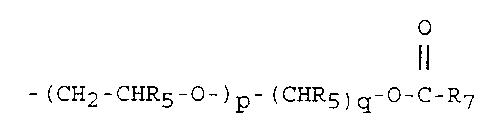 steht, worin R₅ Wasserstoff oder CH₃ bedeutet, p für 0 oder eine ganze Zahl von bis zu 50 steht, q eine ganze Zahl von bis zu 20 darstellt und R₇ eine Alkyl-, Alkenyl-, Aryl-, Arylalkyl-, Arylalkenyl-, Alkylaryl- oder Alkenylarylgruppe mit einer Kohlenstoffkette von wenigstens 6 Atomen bedeutet.

9. Verfahren nach Anspruch 8, worin q den Wert 2 bis 4 hat und R₇ eine Alkyl- oder Alkenylgruppe mit wenigstens 9 Kohlenstoffatomen darstellt.

10. Verfahren nach Anspruch 9, worin p für Null steht, q zwei bedeutet und R₇ eine Alkyl- oder Alkenylgruppe mit 9 bis 18 Kohlenstoffatomen darstellt.

11. Verfahren nach Anspruch 10, worin R₇ die Kohlenstoffkette von Kokosnußfettsäure oder Talgfettsäure darstellt.

12. Verfahren nach einem oder mehreren der Ansprüche 1 bis 11, worin das Anion ein Hydroxid, ein Carboxylat, ein Halogenid, ein Sulfat oder ein organisches Sulfonat darstellt.

13. Verfahren nach einem oder mehreren der Ansprüche 1 bis 12, worin 0,05 bis 11 Gew.-%, bezogen auf den Wassergehalt, des Hydratbildungsinhibitors zu dem Kohlenwasserstoff/Wasser-Gemisch zugesetzt werden.

14. Verfahren nach Anspruch 13, worin die zugesetzte Menge an Hydratbildungsinhibitor 0,1 bis 5 Gew.-%, vorzugsweise 0,1 bis 0,5 Gew.-%, bezogen auf den Wassergehalt, beträgt.

15. Verfahren nach einem oder mehreren der Ansprüche 1 bis 14, worin ein Korrosionsinhibitor zu dem Kohlenwasserstoff/Wasser-Gemisch zugesetzt wird.

16. Verfahren nach Anspruch 15, worin der Korrosionsinhibitor ein primäres, sekundäres oder tertiäres Amin oder ein quaternäres Ammoniumsalz ist, vorzugsweise mit einem Gehalt an wenigstens einer hydrophoben Gruppe.

17. Verfahren nach Anspruch 16, worin der Korrosionsinhibitor ein Benzalkoniumhalogenid ist, vorzugsweise Benzylhexyldimethylammoniumchlorid.

18. Verfahren nach einem oder mehreren der Ansprüche 1 bis 17, worin ein Polymer aus einer ethylenisch ungesättigten N-heterocyclischen Carbonylverbindung zu dem Kohlenwasserstoff/Wasser-Gemisch zugesetzt wird.

19. Verfahren nach Anspruch 18, worin das Polymer ein aliphatisches (N-heterocyclisches Carbonyl)Polymer mit von N-Vinylpyrrolid-2-on und einem ungesättigten Kohlenwasserstoff mit 4 bis 30 Kohlenstoffatomen abgeleiteten Einheiten ist.

20. Verfahren nach Anspruch 19, worin die Polymereinheit von N-Vinylpyrrolid-2-on und Butylen, Octylen, Dodecylen, Hexadecylen, Eicosylen und Tricosylen abgeleitet ist.

## Revendications

1. Procédé pour empêcher le bouchage d'un conduit, le conduit contenant un mélange s'écoulant comprenant une quantité d'hydrocarbures comportant de 1 à 8 atomes de carbone et une quantité d'eau dans lesquelles les quantités d'hydrocarbures et d'eau pourraient former des hydrates aux températures et pressions du conduit, le procédé comprenant les étapes suivantes :
l'addition au mélange d'une quantité d'un composant inhibiteur de formation d'hydrates de la formule : 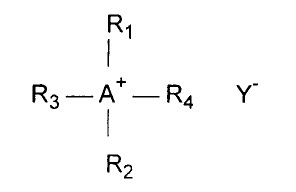
dans laquelle deux des R₁-R₄ représentent indépendamment des alkyles normaux ou ramifiés comportant 4 ou 5 atomes de carbone,
deux des R₁-R₄ représentent indépendamment des fragments organiques comportant au moins 8 atomes de carbone,
A représente un atome d'azote ou de phosphore, et
Y représente un anion,
la quantité du composant inhibiteur de formation d'hydrates étant efficace pour empêcher la formation d'hydrates dans le mélange aux températures et pressions du conduit, et
l'écoulement du mélange contenant le composé inhibiteur de formation d'hydrates dans le conduit.

2. Procédé suivant la revendication 1, dans lequel deux des R₁-R₄ indépendamment contiennent entre 8 et 20 atomes de carbone, avantageusement dans la gamme de 10 à 16 atomes de carbone.

3. Procédé suivant l'une ou l'autre des revendications 1 et 2, dans lequel deux des R₁-R₄ contiennent le même nombre d'atomes de carbone, chacun étant d'au moins 8.

4. Procédé suivant la revendication 1, dans lequel au moins un des R₁-R₄ contient un hétéroatome en plus d'au moins 8 atomes de carbone.

5. Procédé suivant la revendication 4, dans lequel deux des R₁-R₄ contiennent un hétéroatome en plus d'au moins 8 atomes de carbone.

6. Procédé suivant l'une ou l'autre des revendications 4 et 5, dans lequel l'hétéroatome est un atome d'oxygène ou d'azote.

7. Procédé suivant la revendication 6, dans lequel deux des R₁-R₄ indépendamment représentent un fragment -(CH₂-CHR₅-O)ₙH ou -(CH₂-CHR₅-N-R₆)ₘ-CH₂-CH₃ dans lequel R₅ représente H ou CH₃, R₆ représente H ou un alkyle, tel que CH₃ ou C₂H₅, n représente un nombre entier de 4 à 50 et m représente un nombre entier de 3-5.

8. Procédé suivant l'une quelconque des revendications 4 à 6, dans lequel au moins un des R₁-R₄ représente un fragment 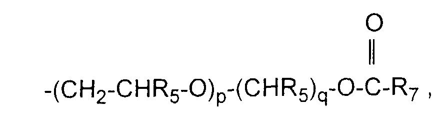 dans lequel R₅ est H ou CH₃, p représente 0 ou un nombre entier jusqu'à 50, q représente un nombre entier jusqu'à 20 et R₇ représente un groupe alkyle, alcényle, aryle, arylalkyle, arylalcényle, alkylaryle ou alcénylaryle comportant au moins une chaîne carbonée de 6 atomes.

9. Procédé suivant la revendication 8, dans lequel q est égal à 2-4 et R₇ représente un groupe alkyle ou alcényle comportant au moins 9 atomes de carbone.

10. Procédé suivant la revendication 9, dans lequel p est égal à zéro, q est égal à 2 et R₇ représente un groupe alkyle ou alcényle comportant entre 9 et 18 atomes de carbone.

11. Procédé suivant la revendication 10, dans lequel R₇ représente la chaîne carbonée d'acide gras de noix de coco ou d'acide gras de suif.

12. Procédé suivant l'une quelconque des revendications 1 à 11, dans lequel l'anion représente un hydroxyde, un carboxylate, un halogénure, un sulfate ou un sulfonate organique.

13. Procédé suivant l'une quelconque des revendications 1 à 12, dans lequel entre 0,05 et 11% en poids, par rapport à la teneur en eau, de l'inhibiteur de formation d'hydrates sont ajoutés au mélange d'hydrocarbures/eau.

14. Procédé suivant la revendication 13, dans lequel la quantité d'inhibiteur de formation d'hydrates ajouté se situe entre 0,1 et 5% en poids, avantageusement de 0,1 à 0,5% en poids par rapport à la teneur en eau.

15. Procédé suivant l'une quelconque des revendications 1 à 14, dans lequel un inhibiteur de corrosion est ajouté au mélange d'hydrocarbures/eau.

16. Procédé suivant la revendication 15, dans lequel l'inhibiteur de corrosion est une amine primaire, secondaire ou tertiaire ou un sel d'ammonium quaternaire, avantageusement contenant au moins un groupe hydrophobe.

17. Procédé suivant la revendication 16, dans lequel l'inhibiteur de corrosion est un halogénure de benzalkonium, avantageusement du chlorure de benzylhexyl diméthyl ammonium.

18. Procédé suivant l'une quelconque des revendications 1 à 17, dans lequel un polymère d'un composé carbonylé N-hétérocyclique éthyléniquement insaturé est ajouté au mélange d'hydrocarbures/eau.

19. Procédé suivant la revendication 18, dans lequel le polymère est un polymère (carbonylé N-hétérocyclique) aliphatique avec des unités provenant de N-vinylpyrrolid-2-one et d'un hydrocarbure insaturé comportant entre 4 et 30 atomes de carbone.

20. Procédé suivant la revendication 19, dans lequel l'unité de polymère provient de N-vinylpyrrolid-2-one et de butylène, d'octylène, de dodécylène, d'hexadécyléne, d'eicosylène et de tricosylène.
